# EUROPÄISCHE PATENTANMELDUNG

(11) **EP 2 963 312 A1**
(43) Veröffentlichungstag der Anmeldung: **06.01.2016**
(21) Anmeldenummer: 15167632.7
(22) Anmeldetag: 13.05.2015
(51) Int. Cl.: F16G 13/02, F16G 13/06

(54) **ROLLENKETTE**

(30) Priorität: 13.05.2014 DE 202014003948 U
(71) Anmelder: Wippermann jr. GmbH, 58091 Hagen (DE)
(72) Erfinder: Rafflenbeul, Thomas, 58091 Hagen (DE)
(74) Vertreter: Eisenführ Speiser

(57) **Zusammenfassung**

Die Erfindung betrifft eine Rollenkette mit einer Mehrzahl von Verbindungsgliedern (2, 4) die durch Bolzen (6) gelenkig miteinander verbunden sind, auf denen poröses Material aufweisende Buchsen drehbar gelagert sind, die ihrerseits Rollen (10) tragen, wobei in den Poren (12) des porösen Materials zumindest teilweise Schmierstoff enthalten ist. Das Besondere der Erfindung besteht darin, dass die Porosität des porösen Materials der Buchsen (8) in Richtung auf den Bolzen (6) zunimmt.

## Beschreibung

Die Erfindung betrifft eine Rollenkette mit einer Mehrzahl von Verbindungsgliedern, die durch Bolzen gelenkig miteinander verbunden sind, auf denen poröses Material aufweisende Buchsen drehbar gelagert sind, die ihrerseits Rollen tragen, wobei in den Poren des porösen Materials zumindest teilweise Schmierstoff enthalten ist. Ferner betrifft die Erfindung eine Buchse für eine derartige Rollenkette sowie die Verwendung dieser Buchse für eine derartige Rollenkette.

Als wartungsarme oder wartungsfreie Ketten ausgebildete Rollenketten sind im Bereich der Industrieketten besonders beliebt, da sie während der betrieblichen Lebensdauer vom Anlagenbetreiber nicht nachgeschmiert werden müssen und somit die Notwendigkeit einer industriellen Wartung entfällt. Derartige Rollenketten haben sich in unterschiedlichen Anwendungen und insbesondere in Dreischicht-Produktionen wie beispielsweise in der Papierzellstoffindustrie, in der pharmazeutischen Industrie und bei Lackierstraßen in der Automobilindustrie bewährt, da jeglicher Stillstand von Maschinen und Anlagen zum Zwecke einer Wartung zu kostenträchtigen Produktionsausfällen führt.

Aus der DE 20 2004 006 332 U1 ist eine Rollenkette bekannt, die aus mittels Bolzen miteinander verbundenen Kettengliedern, Innen- und Außenlaschen sowie Buchsen besteht. Die Bolzen sind mit den Außenlaschen verbunden und von den Buchsen umgeben, die ihrerseits mit den Innenlaschen verbunden sind und außerhalb der Innenlaschen jeweils einen den Abstand zwischen den Außenlaschen und Innenlaschen festlegenden Überstand aufweisen. Die Buchsen sind zweiteilig ausgebildet und bestehen aus einem inneren Polymer-Gleitlager und einer äußeren Trägerbuchse. Bis auf das Polymer-Gleitlager sind sämtliche Bauteile dieser bekannten Rollenkette aus rostbeständigem Edelstahl hergestellt. Durch die Verwendung eines inneren Polymer-Gleitlagers können dort, wo metallische Berührungen auftreten, auch gleichzeitig Schmierungseigenschaften sichergestellt werden, was die bekannte Rollenkette wartungsfrei macht.

Die Forderung nach Wartungsfreiheit lässt sich bevorzugt so erfüllen, dass die Buchsen der Rollenkette bei der Herstellung mit einer für die Spanne der vorgesehenen Lebensdauer hinreichenden Menge von Schmierstoff in einem entsprechend hierfür vorgesehenen und dimensionierten Schmierstoffdepot beladen werden. Eine derartige Lösung wurde von der Anmelderin erstmals mit der "MARATHON"-Kette am Markt eingeführt, bei welcher die Buchsen aus Sintermaterial hergestellt sind und als Schmierstoffdepot das Porenvolumen des Sintermaterials benutzt wird. Dabei wird das Einlaufverhalten dieser bekannten Rollenkette vor allem von den Buchsen aus porösem Sintermaterial, die gleichzeitig als Schmiermitteldepot dienen, bestimmt. Vor der Montage werden die Buchsen unter Druck mit Schmierstoff gefüllt, der dann im späteren Betrieb allmählich aus den Poren an die kritischen Kontaktflächen zwischen Bolzen, Buchse und Rolle abgegeben wird. Durch Feinabstimmung der Parameter "Porenvolumen", "Schmierstoffqualität" und "Schmierstoffviskosität" unter Berücksichtigung der vorgesehenen Einsatztemperatur sowie des Porenöffnungsquerschnittes an den Kontaktflächen wird die Abgabe von Schmierstoff so bemessen, dass das Schmierstoffdepot für die beabsichtigte Lebensdauer ausreichend ist. Eine Verlängerung der Lebensdauer könnte demnach nur dadurch erreicht werden, dass entweder das Schmierstoffdepot, also das Porenvolumen, vergrößert oder der zeitliche Verbrauch an Schmierstoff reduziert wird.

Es ist Aufgabe der vorliegenden Erfindung, eine konstruktive Maßnahme vorzuschlagen, durch die entweder bei gegebener Lebensdauer der Schmierstoffverbrauch reduziert oder bei gegebener Schmierstoffmenge die Lebensdauer verlängert wird.

Diese Aufgabe wird gemäß einem ersten Aspekt der Erfindung gelöst mit einer Rollenkette mit einer Mehrzahl von Verbindungsgliedern, die durch Bolzen gelenkig miteinander verbunden sind, auf denen poröses Material aufweisende Buchsen drehbar gelagert sind, die ihrerseits Rollen tragen, wobei in den Poren des porösen Materials zumindest teilweise Schmierstoff enthalten ist, dadurch gekennzeichnet, dass die Porosität des porösen Materials der Buchsen in Richtung auf den Bolzen zunimmt.

Ferner wird diese Aufgabe gemäß einem zweiten Aspekt der vorliegenden Erfindung dadurch gelöst, dass eine Buchse für eine Rollenkette vorgeschlagen wird, die eine Mehrzahl von Verbindungsgliedern aufweist, die durch Bolzen gelenkig miteinander verbunden sind, auf denen die Buchse drehbar gelagert ist, die ihrerseits eine Rolle trägt, mit einem Hohlraum zur Aufnahme des Bolzens, wobei die Buchse poröses Material aufweist, in dessen Poren zumindest teilweise Schmierstoff enthalten ist, dadurch gekennzeichnet, dass die Porosität des porösen Materials in Richtung auf den Hohlraum zunimmt.

Schließlich wird diese Aufgabe gemäß einem dritten Aspekt der vorliegenden Erfindung durch die Verwendung einer Buchse gemäß dem zweiten Aspekt für eine Rollenkette gelöst, die eine Mehrzahl von Verbindungsgliedern aufweist, die durch Bolzen gelenkig miteinander verbunden sind, auf denen die Buchse drehbar gelagert ist, die ihrerseits eine Rolle trägt.

Dadurch, dass erfindungsgemäß das poröse Material der Buchsen so gestaltet ist, dass dessen Porosität in Richtung auf den Bolzen zunimmt, findet die Schmierstoffabgabe schwerpunktmäßig in Richtung auf den Bolzen statt und konzentriert sich somit die Schmierstoffverteilung an der Kontaktfläche zwischen Buchse und Bolzen. Da erfindungsgemäß im Gegenzuge die Porosität des porösen Materials der Buchsen in Richtung auf deren äußerer Mantelfläche abnimmt, an der ja die Buchse von einer Rolle umgeben ist, ist die Schmierstoffabgabe zur Außenseite der Buchsen in Richtung auf die Innenseite der Rollen zumindest geringer, sodass, wenn überhaupt, nur eine relativ geringe Schmierstoffverteilung an der Kontaktfläche zwischen der äußeren Mantelfläche der Buchsen und der Innenseite der Rollen stattfindet. Für diesen Effekt wird erfindungsgemäß die Verteilung der Porosität im porösen Material der Buchsen mit einem radialen Gradienten versehen, bei dem die Porosität von der äußeren Mantelfläche zur inneren Mantelfläche der Buchsen zunimmt, sodass die Austrittsquerschnitte an der inneren Mantelfläche der Buchsen zum Bolzen hin vergrößert sind, ohne dass Einbußen an mechanischer Stabilität auftreten. Demnach lässt sich mithilfe der Erfindung auf konstruktiv einfache und zugleich wirkungsvolle Weise eine gezielte Dosierung der Schmierstoffabgabe realisieren, was zum einen zu einer Schonung des Schmierstoffdepots in den Buchsen und zum anderen zu einer Verlängerung der Betriebs- bzw. Lebensdauer führt.

Bevorzugte Ausführungen und Weiterbildungen der Erfindung sind in den abhängigen Ansprüchen angegeben.

Vorzugsweise erfolgt die Zunahme der Porosität des porösen Materials der Buchsen in Richtung auf den Bolzen auf progressive Weise. Dies führt zu einer besonders wirksamen Ausnutzung des gesamten Porenvolumens, das somit ausreichend groß ist, um ähnlich viel Schmierstoff wie im Stand der Technik zu speichern.

Zweckmäßigerweise sind die Poren an der zum Bolzen benachbarten Innenseite der Buchsen offen, wobei bevorzugt das Volumen dieser offenen Poren insgesamt etwa 15 bis 20%, bezogen auf das Gesamtvolumen der Buchsen, betragen sollte.

Außerdem ist bevorzugt die Porosität des porösen Materials der Buchsen an ihrer eine Rolle tragenden Außenseite im Wesentlichen null. Hiernach sind also die offenen Poren des porösen Materials an der äußeren Mantelfläche der Buchsen verschlossen, sodass die Abgabe von Schmierstoff nach außen verhindert und ausschließlich nach innen in Richtung auf den Bolzen stattfindet, was zu einer weiteren Schonung des Schmierstoffdepots führt. Diese Ausführung eignet sich insbesondere für Rollen aus Kunststoff, die keine Schmierung beim Rollkontakt mit der Buchse benötigen.

Das Verschließen der Poren des porösen Materials an der Außenseite der Buchsen kann bevorzugt durch mechanische und/oder thermische Bearbeitung der äußeren Mantelfläche der Buchsen vorgenommen werden.

Besonders bevorzugt lassen sich die Poren des porösen Materials an der Außenseite der Buchsen durch mechanisches Schleifen der äußeren Mantelfläche der Buchsen verschließen. Bei werkstofftechnischen Analysen wird mit der Anfertigung von Schliffen die Beobachtung gemacht, dass beim Einsatz bestimmter Schleifkörnungen die Poren von porösem Material in der Schlifffläche verschlossen werden. Diese im Zusammenhang mit Werkstoffanalysen eher negative Beobachtung wird nun jedoch erfindungsgemäß positiv dazu genutzt, durch Schleifbearbeitung die offenen Poren an der äußeren Mantelfläche der Buchse zu verschließen.

Zweckmäßigerweise weist das poröse Material Sintermaterial auf.

Nachfolgend wird ein bevorzugtes Ausführungsbeispiel der Erfindung anhand der beiliegenden Figuren näher erläutert. Es zeigen:
- Fig. 1: in Draufsicht einen Teil einer Rollenkette, wobei wiederum in einem Teil dieser Darstellung die einzelnen Elemente im Schnitt gezeigt sind; und
- Fig. 2: schematisch im Längsschnitt einen Wandabschnitt einer Buchse der Rollenkette von Fig. 1.

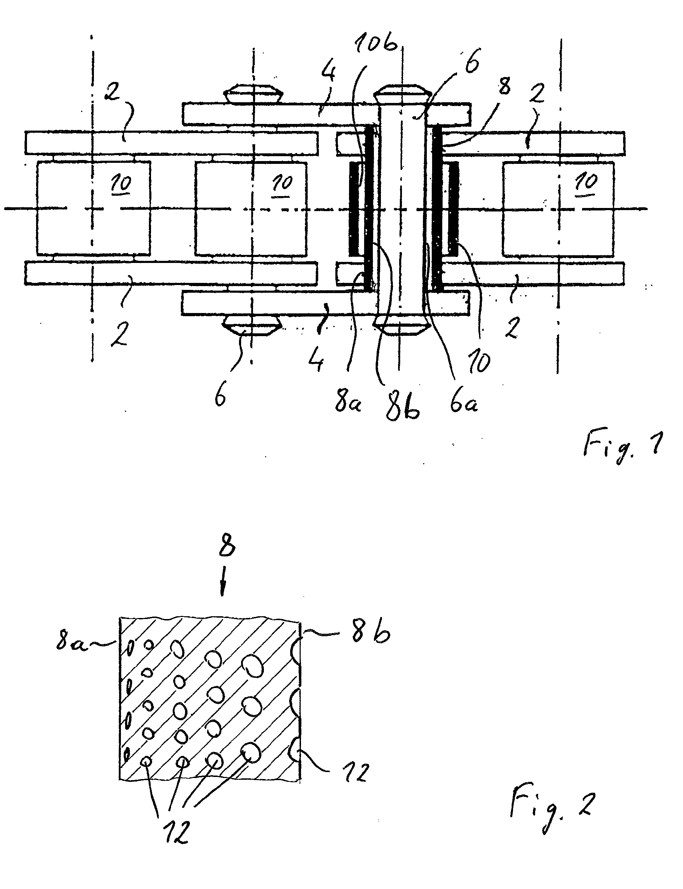

In Figur 1 sind insgesamt vier Innenlaschen 2 erkennbar abgebildet, die über zwei Außenlaschen 4 miteinander verbunden sind. In einem Teil dieser Darstellung sind die einzelnen Elemente im Schnitt gezeigt, und dort ist über seine volle Länge ein Bolzen 6 zu erkennen, der die beiden Außenlaschen 4 an ihrem einen Ende miteinander verbindet, während die beiden Außenlaschen 4 mit ihrem anderen Ende durch einen weiteren Bolzen 6 miteinander verbunden sind. Den Bolzen 6 umgibt eine Buchse 8, die mit zwei Innenlaschen 2 verbunden ist. Im dargestellten Ausführungsbeispiel liegt an jeder der beiden Stirnflächen der Buchse 8 eine der Außenlaschen 4 an. Auf jeder der Buchsen 8 ist eine Rolle 10 drehbar gelagert. Wie insbesondere in demjenigen Teil der Darstellung von Fig. 1 erkennbar ist, in dem die einzelnen Elemente im Schnitt gezeigt sind, sind der Bolzen 6, die sie umgebende Buchse 8 und die zugehörige Rolle 10 koaxial zueinander angeordnet. Zur besseren Erkennbarkeit ist zwar die Buchse 8 in einem Abstand sowohl vom Bolzen 6 als auch von der Rolle 10 dargestellt; tatsächlich jedoch liegt die Buchse 8 mit ihrer inneren Mantelfläche 8b an der äußeren Mantelfläche 6a des Bolzens 6 an, wobei zwischen diesen Mantelflächen 6a, 8b ein Gleitlager gebildet wird, während die Rolle 10 mit ihrer Innenseite 10b auf der äußeren Mantelfläche 8a der Buchse 8 angeordnet ist. Somit begrenzt die innere Mantelfläche 8b der Buchsen 8 einen zylindrischen Hohlraum, der zur Aufnahme eines Bolzens 6 vorgesehen ist. Wie Figur 1 ferner erkennen lässt, ist jeweils ein Paar von voneinander beabstandeten Innenlaschen 2 beidseitig über einen Bolzen 6 mit einem benachbarten Paar von voneinander beabstandeten Außenlaschen 4 und somit auch jeweils ein Paar von voneinander beabstandeten Außenlaschen 4 beidseitig über einen Bolzen 6 mit einem benachbarten Paar von voneinander beabstandeten Innenlaschen 2 gekoppelt, wobei diese Kopplung gelenkig ist.

Figur 2 zeigt einen Längsschnitt durch einen Wandabschnitt der Buchse 8. Wie die Figur 2 schematisch erkennen lässt, besteht die Buchse 8 aus porösem Material, das mit Poren 12 durchsetzt ist. Bevorzugt handelt es sich bei dem porösen Material um Sintermaterial. Wie Figur 2 des weiteren schematisch erkennen lässt, ist die Porosität nicht über die gesamte Breite bzw. Dicke der Wandung der Buchsen 8 zwischen deren äußerer Mantelfläche 8a und deren innerer Mantelfläche 8b gleichmäßig verteilt, sondern nimmt in radialer Richtung von der äußeren Mantelfläche 8a zur inneren Mantelfläche 8b progressiv zu. Dies ist in Figur 2 durch in Richtung von der äußeren Mantelfläche 8a zur inneren Mantelfläche 8b größer werdende Poren 12 angedeutet. Während die relativ großen Poren 12 an der inneren Mantelfläche 8b nach außen offen sind, wobei bevorzugt das Volumen der offenen Poren 12 insgesamt etwa 15 bis 20%, bezogen auf das Gesamtvolumen der Buchse 8, beträgt, ist die äußere Mantelfläche 8a der Buchsen 8 geschlossen. Die geschlossene äußere Mantelfläche 8a lässt sich insbesondere dadurch bilden, dass die dort befindlichen Poren durch mechanische und/oder thermische Bearbeitung verschlossen werden, wobei sich besonders bevorzugt die Poren des porösen Materials an der Außenseite der Buchsen 8 durch mechanisches Schleifen der äußeren Mantelfläche 8a verschließen. Das Volumen der Poren 12 wird als Schmierstoffdepot benutzt. Dadurch, dass das poröse Material der Buchsen 8 so gestaltet ist, dass die Porosität in Richtung auf die innere Mantelfläche 8b zunimmt, während die äußere Mantelfläche 8a verschlossen ist, wird die Abgabe von in den Figuren nicht dargestelltem Schmierstoff aus der äußeren Mantelfläche 8a in Richtung auf die innere Mantelfläche 10b der Rolle 10 verhindert und findet ausschließlich nach innen aus der inneren Mantelfläche 8b in Richtung auf die äußere Mantelfläche 6a des Bolzens 6 statt. Somit lässt sich eine gezielte Dosierung der Schmierstoffabgabe zur Kontaktfläche zwischen der inneren Mantelfläche 8b der Buchse 8 und der äußeren Mantelfläche 6a des Bolzens 6 realisieren. Demgegenüber bestehen die Rollen 10 aus Kunststoff, was eine Schmierung beim Rollkontakt mit der jeweiligen Buchse 8 überflüssig macht.

## Patentansprüche

1. Rollenkette mit einer Mehrzahl von Verbindungsgliedern (2,4), die durch Bolzen (6) gelenkig miteinander verbunden sind, auf denen poröses Material aufweisende Buchsen drehbar gelagert sind, die ihrerseits Rollen (10) tragen, wobei in den Poren (12) des porösen Materials zumindest teilweise Schmierstoff enthalten ist,
**dadurch gekennzeichnet, dass** die Porosität des porösen Materials der Buchsen (8) in Richtung auf den Bolzen (6) zunimmt.

2. Rollenkette nach Anspruch 1,
**dadurch gekennzeichnet, dass** die Zunahme der Porosität des porösen Materials der Buchsen (8) in Richtung auf den Bolzen progressiv erfolgt.

3. Rollenkette nach Anspruch 1 oder 2,
**dadurch gekennzeichnet, dass** die Poren (12) des porösen Materials der Buchsen (8) an ihrer dem Bolzen (6) zugewandten Innenseite (8b) im Wesentlichen offen sind, wobei das offene Volumen dieser Poren (12) insgesamt etwa 15 bis 20%, bezogen auf das Gesamtvolumen der Buchse (8), beträgt.

4. Rollenkette nach mindestens einem der vorangegangenen Ansprüche,
**dadurch gekennzeichnet, dass** die Porosität des porösen Materials der Buchsen (8) an ihrer eine Rolle (10) tragenden Außenseite (8a) im Wesentlichen Null ist.

5. Rollenkette nach Anspruch 4,
**dadurch gekennzeichnet, dass** an der Außenseite (8a) der Buchsen (8) die Poren (12) des porösen Materials durch mechanische und/oder thermische Bearbeitung der Außenseite (8a) der Buchsen (8) im Wesentlichen verschlossen sind.

6. Rollenkette nach Anspruch 4,
**dadurch gekennzeichnet, dass** an der Außenseite (8a) der Buchsen (8) die Poren (12) des porösen Materials durch mechanisches Schleifen der Außenseite (8a) der Buchsen (8) im Wesentlichen verschlossen sind.

7. Rollenkette nach mindestens einem der vorangegangenen Ansprüche,
**dadurch gekennzeichnet, dass** die Rollen (10) im Wesentlichen Kunststoff aufweisen.

8. Rollenkette nach mindestens einem der vorangegangenen Ansprüche,
**dadurch gekennzeichnet, dass** das poröse Material Sintermaterial aufweist.

9. Buchse (8) für eine Rollenkette, die eine Mehrzahl von Verbindungsgliedern (2, 4) aufweist, die durch Bolzen (6) gelenkig miteinander verbunden sind, auf denen die Buchse (8) drehbar gelagert ist, die ihrerseits eine Rolle (10) trägt, mit einem Hohlraum zur Aufnahme des Bolzens (6), wobei die Buchse (8) poröses Material aufweist, in dessen Poren (12) zumindest teilweise Schmierstoff enthalten ist,
**dadurch gekennzeichnet, dass** die Porosität des porösen Materials in Richtung auf den Hohlraum zunimmt.

10. Buchse nach Anspruch 9,
**dadurch gekennzeichnet, dass** die Zunahme der Porosität des porösen Materials der Buchsen (8) in Richtung auf den Bolzen progressiv erfolgt.

11. Buchse nach Anspruch 9 oder 10,
**dadurch gekennzeichnet, dass** die Poren (12) des porösen Materials der Buchsen (8) an ihrer dem Bolzen (6) zugewandten Innenseite 8b im Wesentlichen offen sind, wobei das offene Volumen dieser Poren (12) insgesamt etwa 15 bis 20%, bezogen auf das Gesamtvolumen der Buchse (8), beträgt.

12. Buchse nach mindestens einem der Ansprüche 9 bis 11,
**dadurch gekennzeichnet, dass** die Porosität des porösen Materials an der eine Rolle (10) tragenden Außenseite (8a) der Buchse (8) im Wesentlichen Null ist.

13. Buchse nach Anspruch 12,
**dadurch gekennzeichnet, dass** an der Außenseite (8a) der Buchse (8) die Poren (12) des porösen Materials durch mechanische und/oder thermische Bearbeitung der Außenseite (8a) der Buchse (8) im Wesentlichen verschlossen sind.

14. Buchse nach Anspruch 12,
**dadurch gekennzeichnet, dass** an der Außenseite (a) der Buchse (8) die Poren (12) des porösen Materials durch mechanisches Schleifen der Außenseite (8a) der Buchse (8) im Wesentlichen verschlossen sind.

15. Buchse nach mindestens einem der Ansprüche 9 bis 14,
**dadurch gekennzeichnet, dass** das poröse Material Sintermaterial aufweist.

16. Verwendung einer Buchse (8) nach mindestens einem der Ansprüche 9 bis 15 für eine Rollenkette, die eine Mehrzahl von Verbindungsgliedern (2, 4) aufweist, die durch Bolzen (6) gelenkig miteinander verbunden sind, auf denen die Buchse (8) drehbar gelagert ist, die ihrerseits eine Rolle (10) trägt.
